# EUROPÄISCHE PATENTSCHRIFT

(11) **EP 1 255 094 B1**
(45) Veröffentlichungstag und Bekanntmachung des Hinweises auf die Patenterteilung: **07.04.2010**
(21) Anmeldenummer: 02009901.6
(22) Anmeldetag: 02.05.2002
(51) Int. Cl.: G01F 1/66

(54) **Anordnung zur Messung der Fliessgeschwindigkeit eines Mediums**
Arrangement for measuring the flow speed of a medium
Arrangement de mesure de la vitesse d'écoulement d'un milieu

(30) Priorität: 04.05.2001 DE 10121822
(43) Veröffentlichungstag der Anmeldung: 06.11.2002
(73) Patentinhaber: Landis+Gyr GmbH, 90459 Nürnberg (DE)
(72) Erfinder: Polinski, Ewald, 91177 Thalmässing (DE)
(74) Vertreter: Bauerschmidt, Peter

(56) Entgegenhaltungen:
- EP-A- 0 715 155
- DE-A1- 19 549 162
- DE-A1- 19 632 165
- DE-C1- 19 808 642
- US-A- 6 098 466

## Beschreibung

Die Erfindung betrifft eine Anordnung zur Messung der Fließgeschwindigkeit eines Mediums.

Aus der DE 196 49 437 C1 ist eine Anordnung zur Messung der Fließgeschwindigkeit eines Mediums bekannt, bei der unter Verwendung von nur einem Schallkopf eine Messstrecke in zwei Richtungen durchschallt wird. Dabei kommt ein Doppelreflektor zum Einsatz, der das vom Schallkopf abgesandte Schallsignal in zwei Teilsignale auftrennt, und diese in entgegengesetzte Richtungen auf einem gemeinsamen Schallweg durch ein Messrohr schickt.

Aus der EP 0 725 922 B1 ist eine Anordnung bekannt, bei der zwischen zwei Schallköpfen ein Schallsignal schraubenartig durch das Messrohr geleitet wird. Zusätzlich ist ein Doppelreflektor vorgesehen, so dass zwei spiegelsymmetrische Schallwege für das Schallsignal gebildet sind, wodurch eine Drallkompensation möglich ist. Der gezeigte Messkanal ist jedoch sehr aufwendig in der Herstellung.

Der Erfindung liegt die Aufgabe zugrunde, eine Ultraschallmessanordnung mit einfachem Messrohr für fließende Medien anzugeben, bei der - unter Verwendung herkömmlicher Messkanaltechniken bei möglichst breiter Durchschallung des Messrohres - Messungsgenauigkeiten aufgrund des Dralles des zu messenden Mediums vermieden sind.

Die Lösung der Aufgabe gelingt mit den Merkmalen des Anspruchs 1. Dieser beschreibt eine Anordnung zur Messung der Fließgeschwindigkeit eines Mediums mit einem Messrohr, welches zwei zueinander beabstandete Ultraschallköpfe trägt, wobei das Messrohr innenseitig einen mehreckigen Querschnitt aufweist, welcher zumindest teilweise von planen Längsflächen gebildet ist, wobei zwei aneinanderliegende im Messrohr angeordnete Längsflächen einen Doppelreflektor bilden und wobei, ausgehend von dem ersten Schallkopf, welcher auf den Doppelreflektor gerichtet ist, zwei zueinander spiegelsymmetrische, das Messrohr schraubenartig durchlaufende Schallwege zum zweiten Ultraschallkopf gebildet sind. Mit Vorteil sind die den Doppelreflektor bildenden Längsflächen Innenflächen des Messrohres, wobei die Ultraschallköpfe schräg zueinander ausgerichtet sind.

Mit dieser einfachen Anordnung wird eine doppelschraubenartige Durchschallung des Messkanals erzielt. Somit ist in jedem Fall - auch bei einem starken Drall der zu messenden Flüssigkeit - eine präzise Ermittlung der Fliessgeschwindigkeit möglich. Die grundlegende Idee ist dabei, dass zwei Schraubenwege das Messrohr oder den Messkanal gegenläufig durchschallen. Entgegen den Erwartungen wird dies mit einem einfachen Schallkopfpaar erzielt. Damit ist auch eine einfache Herstellbarkeit gegeben. Im einfachsten Fall kann das Messrohr aus einem Ziehteil gefertigt werden, ohne dass eine zusätzliche Innenbearbeitung erforderlich ist.

Bevorzugt weist das Messrohr innenseitig einen fünfeckigen Querschnitt auf. Das Messrohr ist dabei besonders einfach ausgestaltet und lässt sich als Ziehteil herstellen. Nachträgliche Bearbeitungen der Innenwandung ist nicht erforderlich. Es ist günstig, wenn die Schallwege die Längsachse des Messrohres n x 360° umschallen. n ist dabei eine ganze Zahl. Somit wird der gesamte Durchfluss im Messrohr erfasst.

Nach einer bevorzugten Ausführungsform ist das Messrohr als fünfeckiger Messkanal ausgebildet, wobei die Schallköpfe an einer flachen oder planen Seite des Messkanals angeordnet sind. Sie schallen dabei genau auf die gegenüberliegende Kante oder Spitze des fünfeckigen Messrohres, das als Doppelreflektor dient.

Verblüffend bei der neuen Anordnung ist, dass im Wesentlichen die herkömmlichen Schallköpfe verwendet werden können. Die Kompensation des Dralls erfolgt auf einfache Weise durch ein verändertes Messrohr.

Alternativ kann der Doppelreflektor auch als getrenntes Bauteil im Messrohr angeordnet sein. Somit können auch Rohre mit einfacher Innengeometrie als Messrohr verwendet werden. Die Schallwege im Messrohr zwischen den Schallköpfen weisen bevorzugt eine V- oder W-Form auf. Auf diese Weise lassen sich besonders gute Messergebnisse erzielen.

Weitere Vorteile und Details der Erfindung werden nachfolgend anhand eines Ausführungsbeispiels näher erläutert. Es zeigen:

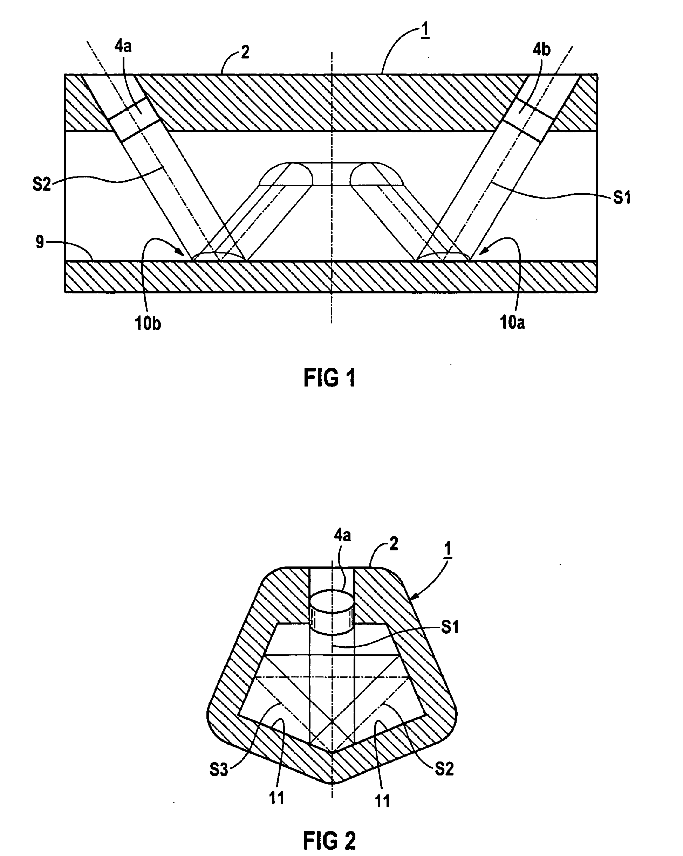

- FIG 1 und 2: eine erfindungsgemäße Anordnung im Längs- bzw. Querschnitt.

Die Figuren zeigen eine Anordnung 1 mit einem Messrohr 2, in welchem in einem vorgegebenen Abstand schräg zueinander ausgerichtet ein erster und ein zweiter Schallkopf 4a, 4b angeordnet sind. Die Schallköpfe 4a, 4b arbeiten nach allgemein bekannten Stand der Technik (siehe oben) derart miteinander, dass sie wechselweise ein Ultraschallsignal (nachfolgend als Schall bezeichnet) in das Messrohr 2 hineinschallen, welches dann vom jeweils anderen Schallkopf empfangen wird. In der Seitenansicht gemäß FIG 1 ergibt sich dabei ein Schallweg, der etwa wie beim Stand der Technik die Form eines "Ws" beschreibt. Der Schall wird dabei auf der den Schallköpfen gegenüberliegenden Seite und an den jeweiligen Seitenwänden reflektiert. Auch sind andere Schallwegformen, z.B. eine V-Form, möglich.

Im Querschnitt gemäß FIG 2 ist zu erkennen, dass im vorliegenden Beispiel das Messrohr 2 innenseitig einen fünfeckigen Querschnitt hat. Prinzipiell sind auch Querschnitte mit mehr oder weniger Ecken und Seiten möglich. Wesentlich ist dabei, dass die Schallköpfe 4a, 4b auf eine Kante 9 des so gebildeten Fünfecks schallen, das einen Doppelreflektor 10a bildet.

Das Schallsignal S1, das von einem Schallkopf 4a ausgeht, wird dann in Teilsignale aufgeteilt, die in zwei gegenläufige Richtungen auf zwei unterschiedlichen Wegen S2, S3 reflektiert und das Messrohr 2 auf den zwei spiegelbildlichen Wegen S2, S3 solange durchschallen, bis sie wieder auf die Kante 9 treffen. An dieser Stelle ist wiederum ein Doppelreflektor 10b gebildet, der die beiden Teilsignale der beiden Wege S2, S3 wieder zusammenführt und zum empfangenden Schallkopf 4a umlenkt.

Auf diese Weise sind zwei schraubenartige Durchschallungen des Messrohrs 2 nach Art einer HELIX gegeben. Besonderer Vorteil ist dabei, dass bei einem Drall des im Messrohr fließenden Mediums dieser die beiden Schallwege gleichmäßig erfasst und somit eine Kompensation erfolgt. Die Schallwege S2, S3 sollten die Längsachse des Messrohres bevorzugt n x 360° umlaufen. Die beiden Innenflächen 11, die als Doppelreflektor 10a, 10b an ihrer gemeinsamen Kante 9 dienen, können auch als geknickte Spiegelfläche oder Reaktorfläche bezeichnet werden.

Wesentlich dabei ist, dass ein sendender Schallkopf auf eine geknickte Spiegelfläche im Sinne eines Doppelreflektor schallt, so dass sich zwei auseinanderlaufende Schallwege ergeben, die nach schraubenförmiger Durchschallung des gesamten Messrohrs 2 wieder aufeinandertreffen und in einem gemeinsamen Weg auf den empfangenen Schallkopf treffen.

Wesentlich für die neue Idee ist auch die einfache Ausgestaltung der gesamten Anordnung. Dabei wird die herkömmliche Technik des sogenannten Ultraschallmessrohres mit W-Weg verwendet. Die Kompensation des Dralls erfolgt durch das neuartige Messrohr 2, welches von sich aus zwei getrennte Messwege durch einen Längsknick an seiner Innenwand erzeugt.

Das Messrohr 2 wird dabei bevorzugt von einem Ziehteil gebildet, dessen Innenwandung nachträglich keiner Bearbeitung bedarf. Es sind lediglich die Anschlüsse für die Schallköpfe 4a, 4b in das Messrohr 2 einzubringen.

Bevorzugte Anwendung der Anordnung sind Ultraschalldurchflussmesser für fließende Medien, insbesondere Wasser und Gas. Mit einer zusätzlichen Temperaturerfassung ist die Anordnung speziell für Wärmezähler einsetzbar. Hierzu ist die Anordnung mit entsprechenden Messeinrichtungen und Mitteln zu versehen. Gegebenenfalls ist auch eine Verwendung für einen Energiezähler für gasförmige oder flüssige Energieträger möglich.

## Patentansprüche

1. Anordnung zur Messung der Fließgeschwindigkeit eines Mediums mit
einem Messrohr (2), welches zwei zueinander beabstandete Ultraschallköpfe (4a, 4b) trägt,
wobei das Messrohr (2) innenseitig einen mehreckigen Querschnitt aufweist, welcher zumindest im Bereich zwischen den Ultraschallköpfen von planen, Längsflächen bildende Innenflächen gebildet ist, welche parallel zur Längsachse verlaufen,
wobei zwei aneinanderliegende im Messrohr (2) angeordnete Längsflächen einen Doppelreflektor (10a, 10b) bilden,
wobei die Ultraschallköpfe (4a, 4b) schräg zueinander ausgerichtet am Messrohr (2) angeordnet sind, und
wobei, ausgehend von dem ersten Schallkopf (4a), welcher auf den Doppelreflektor gerichtet ist, zwei zueinander spiegelsymmetrische, das Messrohr schraubenartig durchlaufende Schallwege (S2, S3) zum zweiten Ultraschallkopf (4b) gebildet sind.

2. Anordnung nach Anspruch 1, wobei der Doppelreflektor als separates Bauteil im Messrohr angeordnet ist.

3. Anordnung nach Anspruch 1 oder 2, wobei das Messrohr einen fünfeckigen Querschnitt aufweist.

4. Anordnung nach Anspruch 1, 2, oder 3, wobei die Schallwege die Längsachse des Messrohres n x 360° umlaufen, wobei n eine ganze Zahl ist.

5. Anordnung nach einem der Ansprüche 1 bis 5, wobei die Schallwege in der Seitenansicht zumindest annähernd eine V- oder W-Form aufweisen.

6. Anordnung nach einem der Ansprüche 1 bis 5, wobei eine Messeinrichtung mit Mittel zur Berechnung einer Durchflussmenge und/oder einer Wärmemenge und/oder eines Energiegehalts eines das Messrohr (2) durchfließbaren Mediums vorgesehen sind.

## Claims

1. Arrangement for measuring the flow rate of a medium with a measurement tube (2) which supports two mutually spaced apart ultrasound heads (4a, 4b),
wherein the measurement tube (2) has a polygonal cross section (2) on the inside, which is formed at least in the area between the ultrasound heads by planar internal faces forming longitudinal faces, which internal faces run parallel to the longitudinal axis,
wherein two adjoining longitudinal faces arranged in the measurement tube (2) form a double reflector (10a, 10b),
wherein the ultrasound heads (4a, 4b) are arranged aligned obliquely in relation to one another on the measurement tube (2), and
wherein coming from the first ultrasound head (4a), which is directed towards the double reflector, two mirror-symmetrical sound paths (S2, S3) are formed, which run through the measurement tube in a helical manner to the second ultrasound head (4b).

2. Arrangement according to claim 1, wherein the double reflector is arranged as a separate component in the measurement tube.

3. Arrangement according to claim 1 or 2, wherein the measurement tube has a pentagonal cross section.

4. Arrangement according to claim 1, 2 or 3, wherein the sound paths circulate round the longitudinal axis of the measurement tube n x 360°, wherein n is an integer.

5. Arrangement according to one of claims 1 to 5, wherein the sound paths have at least approximately a V or a W-shape in side view.

6. Arrangement according to one of claims 1 to 5, wherein a measuring device is provided with means for calculating the flow rate and/or heat quantity and/or the energy content of a medium flowing through the measurement tube (2).

## Revendications

1. Arrangement de mesure de la vitesse d'écoulement d'un milieu, comprenant
un tube de mesure (2) portant deux têtes à ultrasons (4a, 4b) placées à distance l'une de l'autre,
le tube de mesure (2) présentant, côté intérieur, une section transversale polygonale qui, au moins dans la région comprise entre les têtes à ultrasons, est constituée de surfaces intérieures planes formant des surfaces longitudinales, lesquelles sont parallèles à l'axe longitudinal, deux surfaces longitudinales disposées côte à côte dans le tube de mesure (2) formant un double réflecteur (10a, 10b),
les têtes à ultrasons (4a, 4b) étant disposées orientées de façon inclinée l'une par rapport à l'autre sur le tube de mesure (2), et
à partir de la première tête à ultrasons (4a), qui est dirigée vers le double réflecteur, sont formés deux trajets ultrasonores (S2, S3), en symétrie miroir l'un par rapport à l'autre, traversant le tube de mesure à la manière d'une hélice, vers la deuxième tête à ultrasons (4b).

2. Arrangement selon la revendication 1, dans lequel le double réflecteur est disposé en tant qu'élément séparé dans le tube de mesure.

3. Arrangement selon la revendication 1 ou 2, dans lequel le tube de mesure présente une section transversale pentagonale.

4. Arrangement selon la revendication 1, 2 ou 3 dans lequel les trajets ultrasonores tournent de n x 360° autour de l'axe longitudinal du tube de mesure, n étant un nombre entier.

5. Arrangement selon l'une des revendications 1 à 5, dans lequel les trajets ultrasonores présentent, en vue latérale, au moins approximativement une forme en V ou W.

6. Arrangement selon l'une des revendications 1 à 5, dans lequel est prévu un dispositif de mesure doté d'un moyen de calcul d'un débit et/ou d'une quantité de chaleur et/ou d'une teneur en énergie d'un milieu pouvant s'écouler à travers le tube de mesure (2).
